# EUROPEAN PATENT APPLICATION

(11) **EP 4 369 662 A1**
(43) Date of publication of application: **15.05.2024**
(21) Application number: 22206118.6
(22) Date of filing: 08.11.2022
(51) Int. Cl.: H04L 12/18

(54) **REAL-TIME COMMUNICATION SYSTEM AND METHOD FOR OPERATING THE REAL-TIME COMMUNICATION SYSTEM**

(71) Applicant: Heigis, Frank Gerald, 73630 Remshalden (DE); Dukanovic, Aleksandar, 82008 Unterhaching (DE)
(72) Inventor: Heigis, Frank Gerald, 73630 Remshalden (DE); Dukanovic, Aleksandar, 82008 Unterhaching (DE)
(74) Representative: Hannke Bittner & Partner mbB Regensburg

(57) **Abstract**

The present disclosure relates to a real-time communication system (100) and to a method to control the real-time communication system (100), the real-time communication system (100) comprising a smart device (110) and a microcontroller device (120), the smart device (110) comprising a processor (114) and a communication circuit (112) connected to the processor (114), the µC device (120) comprising a processor (124) and a communication circuit (112) connected to the processor (124), wherein client specific data from the µC device (120) and data from the smart device (110) is configured to be displayed simultaneously and in real-time in a virtual meeting.

## Description

### FIELD OF THE DISCLOSURE

The present disclosure relates to a real-time communication system, in particular for a tele-medical application, and to a method for operating the real-time communication system. Specifically, the present disclosure relates to a real-time communication system for a tele-medical application and to a method for operating the real-time communication system, comprising a smart device and a microcontroller device, each comprising a processor and a communication circuit. The present disclosure further relates to a computer program product configured to perform the method for operating the real-time communication system.

### BACKGROUND OF THE DISCLOSURE

Telemedicine or telehealth is the distribution of health-related services and information via electronic information and telecommunication technologies. It enables long-distance patient and clinician contact, care, advice, reminders, education, intervention, monitoring, and remote admissions. Telemedicine is sometimes used as a synonym, or is used in a more limited sense to describe remote clinical services, such as diagnosis and monitoring. When rural settings, lack of transport, a lack of mobility, conditions due to outbreaks, epidemics or pandemics, decreased funding, or a lack of staff restrict access to care, telehealth may bridge the gap.

Conventional tele-medical application only provide the possibility to perform calls or video calls between patient and doctor, further it might be possible to upload patient related data prior or after such a call between the patient and the doctor. Up to now, it is still required to visit doctors for most of medical examinations; even small follow-up examinations require to visit the doctor. This is the case because it is up to now not possible to share critical patient specific data in real-time with the doctor or another clinical contact, via a tele-medical application.

For example, after a dental treatment at a dentistry it may be required to have a follow-up checkup to check if the dental treatment was successful. The patient conventionally has to visit the dentist, wait in the waiting room until the dentist has time for the checkup. During the checkup, the dentist inspects visually the treated area. The entire checkup process could require for the patient several hours.

### SUMMARY OF THE DISCLOSURE

It is an object of this disclosure to provide a real-time communication system and a method for operating the real-time communication system. In particular, it is an object of the present disclosure to provide a real-time communication system and a method for operating the real-time communication system, which system and method do not have at least some of the disadvantages of the prior art.

According to the present disclosure, these objects are addressed by the features of the independent claims. In addition, further advantageous embodiments follow from the dependent claims and the description.

According to the present disclosure, the above-mentioned objects are particularly achieved by a real-time communication system. The real-time communication system according to the present disclosure comprises a smart device and a microcontroller device, the smart device comprising a processor and a communication circuit connected to the processor, the µC device (microcontroller device) comprises a processor and a communication circuit connected to the processor. The processor of the smart device and the processor of the µC device are configured to perform the following steps:
- connecting, by the processor of the µC device, the communication circuit of the µC device to at least one peripheral device, which is configured to provide client specific data of a client to the µC device in real-time;
- connecting, by the processor of the µC device, the communication circuit of the µC device to a virtual meeting platform, which is provided by a remote server, such that the µC device is configured to participate as separate participant in a virtual meeting provided by the virtual meeting platform;
- connecting, by the processor of the smart device, the communication circuit of the smart device to the virtual meeting platform such that the smart device is configured to participate as separate participant in the virtual meeting;
- sending, by the processor of the µC device, the provided client specific data from the µC device to the remote server in real time and simultaneously sending, by the processor of the smart device, captured data of the client from the smart device in real time to the remote server, such that the client data from the µC device and the data from the smart device can be displayed simultaneously and in real-time in the virtual meeting.

The real-time communication system according to the present disclosure is a simple and reliable solution, in particular for a tele-medical, virtual meeting, in which the client specific data from the peripheral devices and the client data captured by the smart device can be displayed simultaneously and in real-time in the virtual meeting. This enables for example that the smart device sends captured audio and video data of the client to the virtual meeting and that simultaneously the µC device sends received client specific data or patient specific data, like data from an intraoral camera, to the virtual meeting in real-time. A professional, which also participates the virtual meeting can see and hear the client by the data from the smart device and can simultaneously and in real-time see the data from the intraoral camera. The professional, for example a dentist, can thereby perform a checkup inspection without having the client in his dentistry. Visiting the dentist for the client is not necessary, which saves time for the client and the professional. The µC device and the respective peripheral device is for example send previously to the client or the professional gave the µC device and the peripheral device to the client during the last meeting in person. The separation of the data send from the smart device and the client specific data send from the µC device enables to transfer the required high amount of data to enable the required real-time communication.

In an embodiment, the real-time communication system is configured for a tele medical application. In this embodiment, the client is a patient, for example a mammal like a human, a dog, a cat or another animal. Further, the professional is a doctor and / or a medical expert. In this embodiment, the client specific data from the at least one peripheral device is for example patient specific data and client data from the smart device is patient data.

In a further embodiment, the real-time communication system is configured for a rescue application, in particular for a rescue application in a catastrophic scenario, in a war scenario or in a big event scenario. For example, the µC device and the peripheral device is implemented in an ambulance vehicle and the client is a patient in the ambulance vehicle. The client specific data is for example determined by at least one of the peripheral devices and provided to the µC device. The smart device, which may be operated by a paramedic in the ambulance vehicle, is configured to send the data of the client, which may comprise video and audio data of the paramedic and / or the patient in the ambulance vehicle, to the remote server in real time. The smart device enables the communication between the paramedic and the client in the ambulance vehicle and a doctor via the virtual meeting platform. Further, the doctor sees the patient-specific data provided by the at least one peripheral device via the virtual meeting platform. The smart device is, for example also integrated in the ambulance vehicle. In other words, the patient in the ambulance vehicle, which is for example unconscious, is connected to at least one of the peripheral devices for the data transfer of the patient-specific data via the µC device to the remote server, and further, the smart device, which also may be operated by the paramedic, is configured to send data of the paramedic and or data of the client to the remote server. Data of the client, captured by the smart device may comprise video and audio data of the paramedic and / or video and audio data of the patient.

Further, in another rescue embodiment, the µC device and the peripheral device are portable devices. A rescue professional, may carry the µC device and the at least one peripheral device, which are for example integrated into a single device, in a disaster area or war area from client to client, or from wounded patient to wounded patient. The peripheral device is connected to the different clients, by the rescue professional, and sends the patient specific data to the virtual meeting platform. At the same time, the smart device, which is for example a separate device or also integrated in the portable µC device and the peripheral device, sends data of the rescue professional and / or data of the individual client (patient) to the remote server. A doctor, which participates in the virtual meeting, may classify the different patients via the virtual meeting platform using a triage system. Further, the doctor may advice the rescue professional via the smart device, and / or may control the peripheral device. The real-time communication system according to these embodiments enables professionals, in particular medical professionals like doctors, to perform a first examination of patients, in particular in war zones, disaster zones and / or zones major events.

In another embodiment, the real time communication system is configured for a different application, for example, a remote surveillance application of an industrial application, in which the client is for example a specific machinery and the professional is for example a technical expert for this machinery. In this embodiment, the client specific data from the at least one peripheral device is for example machine specific data and client data from the smart device is machine data.

In an embodiment, the processor of the µC device is configured to connect the communication circuit of the µC device to the virtual meeting platform using a wireless local area network connection or a wired local area network connection between the communication circuit of the µC device and a local area network, which is connected to the remote server. The communication circuit of the µC device comprises for example a WLAN interface or a LAN interface to provide the required connection possibilities. In a further embodiment, the communication circuit of the µC device comprises a dual band or multiband WLAN interface or LAN interface to advantageously connect the µC device to the remote server and simultaneously to the peripheral devices. For example, the communication circuit of the µC device connects to a local area network via one of the WLAN frequency bands of the communication circuit. The local area network is for example connected to the internet and provides access for the µC device to the remote server. Such a connection enables in an advantageous manner the required real time communication between the µC device and the peripheral devices.

In an embodiment, the µC device and the at least one peripheral device is one single device, which is configured to collect the required client specific data and to send this data to the remote server. In another embodiment, the µC device and the peripheral device are two separate devices, which are configured to be connected as described above and hereinafter.

In an embodiment, the processor of the µC device is configured to connect the communication circuit of the µC device to the virtual meeting platform via the smart device using a connection between the communication circuit of the µC device and the communication circuit of the smart device, which is connected to the remote server. In this embodiment, the communication between the µC device and the remote server is performed via the smart device.

In an embodiment, the connection between the communication circuit of the µC device and the communication circuit of the smart device is a short range wireless connection, for example a Bluetooth connection, a wireless local area network connection or a universal serial bus (USB) connection. The communication circuit of the smart device may comprise a dual or multiband WLAN Interface, wherein one frequency band is used to connect and communicate with the µC device and another frequency band is used to connect and communicate with the remote server (e.g. via a local area network which is connected to the internet).

In an embodiment, the processor of the smart device is further configured to receive data from the remote server in real-time and to display and / or output the received data to the client in real-time. The received data is for example video data and / or audio data captured for example by a professional interface. In other words, the smart device does not only participates as sender to the virtual meeting of the virtual meeting platform but also as receiver of data. A professional may communicate via the virtual meeting to the client via the smart device by sending the audio and / or video data to the smart device via the virtual meeting platform.

In an embodiment, the processor of the µC device is further configured to receive control instructions from the remote server in real time and to control at least one of the peripheral devices using the received control instructions. The connection of the peripheral devices is according to this embodiment used to receive control instructions from the remote server, determined by the professional. The control instructions are for example processed and send to the respective peripheral device to control the peripheral device as desired, for example in real-time. The control instructions are for example send from the remote server directly to the µC device or via the smart device to the µC device.

In an embodiment, the at least one peripheral device, which is configured to provide client specific data to the µC device, comprises a camera, preferably an intraoral camera, an ultrasound device, a temperature sensor, a stethoscope device, a blood pressure measuring device, a pulse oximeter device, a pulse measuring device, an EKG device, a dermatoscopic device, an ophthalmoscopy device, an endoscopic device, an electroencephalograph, an electromyography and / or an electroneneurograph. A combination of the peripheral devices mentioned above is also conceivable. In other words, the peripheral device may be any device or any device combination, which is configured to provide / measure / capture client specific data, like pictures, videos, radio-waves, sound-waves and / or any other kind of data.

In an embodiment, the processor of µC-device is configured to connect, the communication circuit of the µC-device to a plurality of peripheral devices, wherein each of the connected peripheral devices are configured to provide the client specific data of the client to the µC-device, and wherein the processor of the µC-device is further configured to send the provided client specific data from the µC-device to the remote server in real-time such that the client data from each peripheral device can be displayed simultaneously and in real-time in the virtual meeting. Each of the peripheral devices may join the virtual meeting as separate participant, which enables to display advantageously the different client specific data in real-time and simultaneously. Separate participant in this context includes or means that the data send by each peripheral device is displayed and / or presented separate, independently from other data of other devices, like the smart device or other peripheral devices.

In an embodiment, the processor of the µC device is configured to connect the communication circuit of the µC device to the at least one peripheral device using a wireless local area network connection, a local area network connection, an USB connection or a Bluetooth connection. The communication circuit of the µC device comprises for example the respective communication interface(s) to communicate with the peripheral device and the remote server. For example, the communication between the communication circuit of the µC device is performed via one frequency band of the dual band WLAN interface of the communication circuit of the µC device.

In an embodiment, the processor of the smart device is configured to connect the communication circuit of the smart device to the virtual meeting platform using a mobile communication network connection, in particular a mobile data network, such as Global System for Mobile Communication (GSM), Code Division Multiple Access (CDMA), or Long Term Evolution (LTE) networks, and/or a close range wireless communication interface using a Wi-Fi network (WLAN), Bluetooth, or a local area network connection.

In a further embodiment, the processor of the smart device is further configured to receive data from the remote server in real-time from at least one of: a professional interface, a relatives interface or an additional interface. According to this embodiment, the virtual meeting platform is not only available for the professional, the client and the data of the peripheral devices provided by the µC device, but also for additional professionals, medical personal, care personal and / or additional related persons, for example relatives of the client.

In an embodiment, the processor of the smart device is further configured to receive data from the remote server in real-time and to display and / or output the received data to the client in real-time. The data is for example video data and / or audio data captured for example by the professional interface or the additional interface.

In an embodiment, the real-time communication system is configured to communicate between at least two of: the µC device, the smart device, the remote server, the peripheral devices, the professional interface or the additional device, within a range of 10 milliseconds to 500 milliseconds, preferably within a range of 25 milliseconds to 400 milliseconds, even more preferably below 150 milliseconds.

In an embodiment, the client data from the smart device sent to the remote server, the client specific data sent from the µC device to the remote server, the control instructions from the professional interface and / or data from the professional interface and / or the additional interface sent to the remote server is real time data. Real time data is information / data, which is delivered immediately after collection. For example, the data collected by the smart device is immediately sent to the remote server immediately and is therefore real time data. The data collected by the peripheral device is for example stored in the peripheral device and is during the storing not real time data. For example, after a specific time, the collected client specific data is sent from the peripheral device to the µC device in real time and further to the remote server in real time. During these steps, the client specific data is real time data.

Real-time describes various operations in computing or other processes that must guarantee response times within a specified time (deadline), usually a relatively short time. In an embodiment, the measurement time of the peripheral devices does not need to be in real-time. In other words, the peripheral device may collect or measures the client specific data within a specific time (not real-time, for example within two seconds) and sends the collected data to the µC device in real-time. In another embodiment, also the measurement time of the peripheral devices is in real-time.

According to a further aspect of the present disclosure, a method for operating the real-time communication system as mentioned above and hereinafter is specified. The method comprising the steps of:
- connecting, by the processor of the µC device, the communication circuit of the µC device to at least one peripheral device, which sends / provides client specific data of a client to the µC device in real-time;
- connecting, by the processor of the µC device, the communication circuit of the µC device to a virtual meeting platform, which is provided by a remote server, such that the µC device participates as separate participant in a virtual meeting provided by the virtual meeting platform;
- connecting, by the processor of the smart device, the communication circuit of the smart device to the virtual meeting platform such that the smart device participates as separate participant in the virtual meeting;
- sending, by the processor of the µC device, the provided client specific data from the µC device to the remote server in real-time and simultaneously sending, by the processor of the smart device, captured data of the client from the smart device to the remote server in real-time, such that the client specific data from the µC device and the data from the smart device is displayed simultaneously and in real-time in the virtual meeting.

In an embodiment, the processor of the µC device connects the communication circuit of the µC device to the virtual meeting platform via the smart device using a connection between the communication circuit of the µC device and the communication circuit of the smart device, which is connected to the remote server.

In an embodiment, the method further comprises the step of receiving, by the processor of the smart device, data from the remote server in real-time, and displaying / outputting, by the processor of the smart device, the received data to the client in real-time.

In an embodiment, the method further comprises the step of receiving, by the processor of the µC device, control instructions from the remote server in real time and controlling at least one of the peripheral devices using the received control instructions.

In an embodiment, the processor of the µC device connects the communication circuit of the µC device to the at least one peripheral device using a wireless local area network connection, a local area network connection, an USB connection or a Bluetooth connection.

In an embodiment, the real-time communication system is a soft real-time communication system, using for example a peer to peer network (between the remote server, the smart device, the µC device, the professional interface and the additional interface) or a client server network (between the remote server, the smart device, the µC device, the professional interface and the additional interface), wherein the remote server is the server and the different devices are the clients. A combination is also conceivable.

According to a further aspect of the present disclosure, a computer program product comprising a non-transitory computer readable medium is specified. The non-transitory computer readable medium has stored thereon computer program code configured to direct the processor of the µC device and the processor of the smart device to perform a method according to one of the claims.

### BRIEF DESCRIPTION OF THE DRAWINGS

The present disclosure will be explained in more detail, by way of example, with reference to the drawings in which:
- **Figure 1**: shows a first block diagram illustrating schematically a real-time communication system for a tele-medical application according to a first embodiment,
- **Figure 2**: shows a second block diagram illustrating the real-time communication system according to the first embodiment,
- **Figure 3**: shows a first flow diagram illustrating an exemplary sequence of steps performed by a smart device of the real-time communication system,
- **Figure 4**: shows a second flow diagram illustrating an exemplary sequence of steps performed by a microcontroller device of the real-time communication system,
- **Figure 5**: shows a third flow diagram illustrating an exemplary sequence of steps performed by a remote server of the real-time communication system,
- **Figure 6**: shows a fourth flow diagram illustrating an exemplary sequence of steps performed by a peripheral device of the real-time communication system,
- **Figure 7**: shows a fifth flow diagram illustrating an exemplary sequence of steps performed by a professional interface of the real-time communication system,
- **Figure 8**: shows a sixth flow diagram illustrating an exemplary sequence of steps performed by a additional interface of the real-time communication system,
- **Figure 9**: shows a seventh flow diagram illustrating an exemplary embodiment of step M2 as shown in Figure 4;
- **Figure 10**: shows an eight flow diagram illustrating an exemplary sequence of steps performed by the real-time communication system during its operation.

### DETAILED DESCRIPTION OF THE EMBODIMENTS

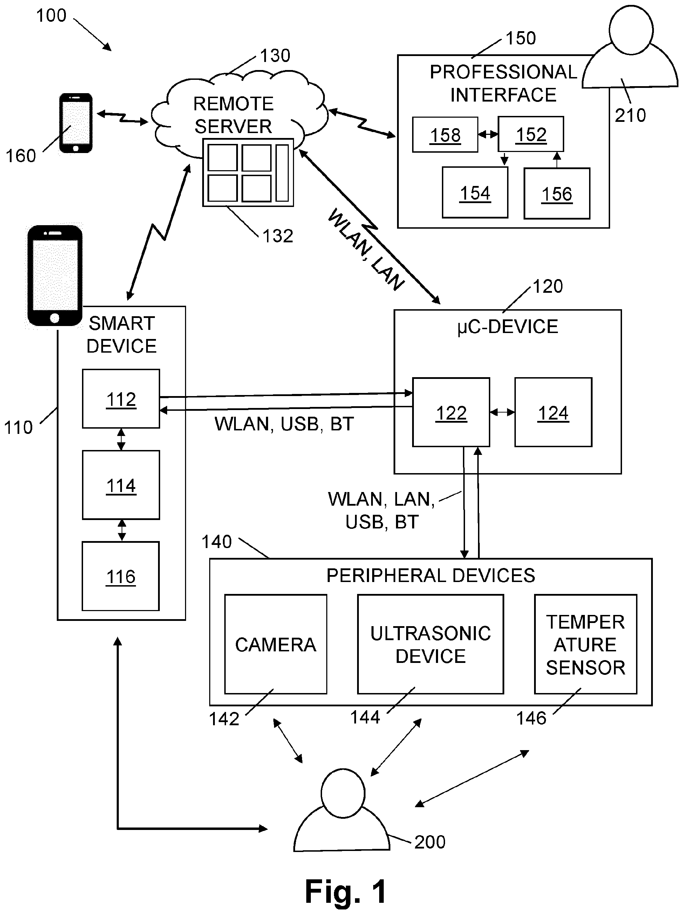

In **Figure 1****,** reference numeral 100 refers to a real-time communication system for a tele medical application. The real-time communication system 100 comprises according to this embodiment a smart device 110, a microcontroller device 120, peripheral devices 140, a remote server 130, a professional interface 150 and an additional interface 160.

The smart device 110 comprises a communication circuit 112, configured to perform the required communication between the smart device 110 and the remote server 130 and the smart device 110 and the microcontroller device 120, if required. The smart device 110 further comprises a processor 114 and a data collecting device 116. The processor 114 is configured to control the smart device 110, in particular to control the communication circuit 112 and the data collecting device 116. The processor 114 receives / sends for example data and / or control instructions from and to the remote server 130 via the communication circuit 112. The processor 114 may further receive client data from the data collecting device 116 and sends the data to the remote server 130 via the communication circuit 112. The data collecting device 116 is for example a camera and / or a microphone. The smart device 110 may further comprise a client interface or patient interface, in particular a data output device, for example a speaker and or a display, which is configured to display and / or output data to a client 200. The smart device 110 is for example a smartphone, a notebook, a personal computer, a tablet, a smart watch, a virtual reality headset and / or a combination thereof. The client 200 is for example a patient 200, which uses the real-time communication system 100 for medical advice. The patient 200 may therefore be a mammal like a human. Further, it is conceivable that an owner of a mammal like a dog, a horse etc. uses the real-time communication system 100 for medical advice for his domestic animal. In this case, the client 200 is the domestic animal. In another embodiment, a technician may use the real-time communication system 100 for technical advice of a specific machinery. In this scenario, the client 200 may be the machinery. Further, in an embodiment, where the client is unconscious, client data, collected by the smart device 110 may comprise data (e.g. video and audio data) of the client 200 and / or may comprise data (e.g. video and audio data) of a person, near the client, for example a paramedic.

The microcontroller device 120 (µC-device) comprises a communication circuit 122 and a processor 124. The communication circuit 112 is configured to perform the required communication between the µC-device 120 and the peripheral device 140 and the µC-device and the remote server 130. The processor 124 is configured to control the µC-device 120, in particular to control the communication circuit 112 of the µC-device 120 and to control and process data received from the peripheral device 140 and the remote server 130. The µC-device 120 is for example a microcontroller, a microcomputer (e.g. a raspberry Pi) and / or a single-board computer/microcontroller (e.g. an arduino), which is specifically designed and developed for the application and comprises the required communication modules (e.g. a dual band wifi interface) and processing modules.

The remote server 130 is configured to provide and host a virtual meeting platform 132. The remote server 130 comprises therefore communication means to communicate at least with the smart device 110, the µC-device 120, the professional interface 150 and/or the additional interface 160. The remote server 130 is for example connected to the internet, which enabled the required communication. The remote server 130 is for example located in a clinical building, at a facility of the professional or in a completely remote area. The remote server 130 is configured to host a virtual meeting using the virtual meeting platform 132. The virtual meeting platform 132 is a software, which runs on the remote server 130 and/or on the other devices and enables and coordinates that the different participants join the right virtual meeting. In order to do so, the virtual meeting platform 132 provides virtual meetings, controls access rights by possible different participants and enables the real-time communication between the different participants. According to the embodiment as shown in Figure 1, the virtual meeting platform 132 hosted by the remote server 130 enabled the smart device 110 to participate in the virtual meeting, the professional interface 150, the µC-device 120 and the additional interface 160. In other words, all of the named devices may participate as separate participants in the virtual meeting provided by the virtual meeting platform 132. This enables for example that audio and video data from the client 200 provided by the smart device 110 is in real-time and simultaneously presented next to the measured client specific data provided by the µC-device 120. A professional 210, which may join the virtual meeting via the professional interface 150 sees the audio and video data from the client 200 provided by the smart device 110 and simultaneously and in real-time the measured client specific data of the client 200 provided by the µC-device 120. Possible additional professionals, care personal or related persons may join the virtual meeting via the additional interface 160. The remote server 130 is the connecting part of the system between the different participants. The remote server 130 may also be at least partially be implemented in the professional interface 150, the smart device 110 and / or the µC-device 120. The virtual meeting platform 132 may provide the virtual meeting in a virtual world environment, e.g. a metaverse environment. The professional 210, is for example a doctor, a medical personal, technical personal or another specially qualified personnel.

The peripheral devices 140 are configured to measure and / or capture client specific data of the client 200. The client specific data can typically not be measured by the smart device 110, which is why the peripheral devices 140 are required. The peripheral devices 140 are for example a camera 142, preferably an intraoral camera, an ultrasound device 144, a temperature sensor 146, a stethoscope device, a blood pressure measuring device, a pulse oximeter device, a pulse measuring device, an EKG device, a dermatoscopic device, an ophthalmoscopy device, an endoscopic device, an electroencephalograph, an electromyography and / or an electroneneurograph. Additional or alternative peripheral devices 140 are also conceivable. The peripheral devices 140 are configured to be connected to the µC-device 120 and are further configured to measure the client specific data or patient specific data (for example temperature, heart rate, heart rate variability, ultrasound data, audio and video data and / or data provided by the devices mentioned above). The peripheral devices 140 are further configured to send the client specific data to the µC-device 120. The peripheral devices 140 may be further configured to be controlled by the µC-device 120, which may send control instructions to the peripheral devices 140. The peripheral devices 140 are for example connected to the client 200 and operated by the client itself or an additional person, which may also operate the smart device 110, for example a paramedic.

The professional interface 150 is for example a notebook, a workstation, a smart phone, a virtual reality headset, which enables the professional 210 to participate in a virtual meeting provided by the virtual meeting platform 132. The professional interface 150 may comprise a processor 152, an output device 154, an input device 156 and a communication circuit 158. The processor 152 is configured to control the professional interface 150 and all of its different parts. The communication circuit 158 is configured to connect the professional interface 150 to the remote server 130. The communication circuit 158 comprises for example a wireless local area network interface to connect the professional interface 150 to the internet. The output device 154 is for example a display and / or a speaker, which is configured to display data and or present audio data from the virtual meeting platform 132 to the professional 210. The input device 156 is for example a camera and / or microphone, which are configured to capture data from the professional 210. This data is send via the communication circuit 158 to the remote server 130 and presented in the virtual meeting for the client 200. The input device 156 may additionally include a control terminal, which is configured to control at least one of the peripheral devices 140. The control terminal is for example configured to capture the control instructions from the professional 210 and to send the control instructions via the remote server 130 and the µC-device 120 to the respective peripheral device or devices 140.

The additional interface 160 is for example a smartphone, a notebook, a virtual reality headset, a tablet etc., which enables an additional participant to participate in the virtual meeting provided by the virtual meeting platform 132. The additional participant is for example an additional professional, care personal, a dental specialist, a client related person or a combination thereof. The additional interface 160 may also be an additional professional interface 150. Different professional interfaces 150 may be configured to control different peripheral devices 140. For example, one specialized professional 210a controls one of the specific peripheral device 140 and another specialized professional 210b control another one of the specific peripheral devices 140. A plurality of additional interfaces 160 is also conceivable.

In order to join the required virtual meeting of the virtual meeting platform 132, all or at least some of the devices as mentioned above and hereinafter may comprise a specific software or application software, which is configured to enable the participation in the specific virtual meeting by the devices. The µC-device 120 for example comprises a specific software or application software running on the processor 124, which enables the different client specific data streams received by the peripheral devices 140 to join the virtual meeting of the virtual meeting platform 132 as separate participants, such that the professional 210 sees the required data streams via the professional interface 150 simultaneously and in real-time.

The µC-device 120 is connected via its communication circuit 122 to the peripheral devices 140. This connection is for example a wireless local area network connection, a local area network connection (Ethernet connection) a universal bus connection (USB), a Bluetooth connection, a connection via a mobile communication network and / or a combination thereof. Different peripheral devices 140 may use different connections.

The µC-device 120 is further connected via its communication circuit 122 to the remote server 130, in particular to the virtual meeting platform 132 provided by the remote server 130. The connection is for example a wireless local area network connection, a local area network connection or a USB connection to a local area network, which is connected directly to the remote server 130 or to the internet. In another embodiment, the connection between the µC-device 120 and the remote server 130 is established via the smart device 110. In this case, the µC-device 120 is connected to the smart device 110, for example via a WLAN-, USB- and / or Bluetooth-connection, which enables the required connection between the µC-device 120 and the remote server 130.

The smart device 110 is for example connected via its communication circuit 112 to the remote server 130. The connection used for example a wireless or wired LAN connection or a mobile network connection, in particular a mobile data network, such as Global System for Mobile Communication (GSM), Code Division Multiple Access (CDMA), or Long Term Evolution (LTE) networks, and/or a close range wireless communication interface using a Wi-Fi network (WLAN), Bluetooth, etc.

The professional interface 150 and the additional interface 160 is/ are for example connected via its communication circuit 158 to the remote server 130. This connection uses for example a wireless or wired LAN connection or a mobile network connection, in particular a mobile data network, such as Global System for Mobile Communication (GSM), Code Division Multiple Access (CDMA), or Long Term Evolution (LTE) networks, and/or a close range wireless communication interface using a Wi-Fi network (WLAN), Bluetooth, etc.

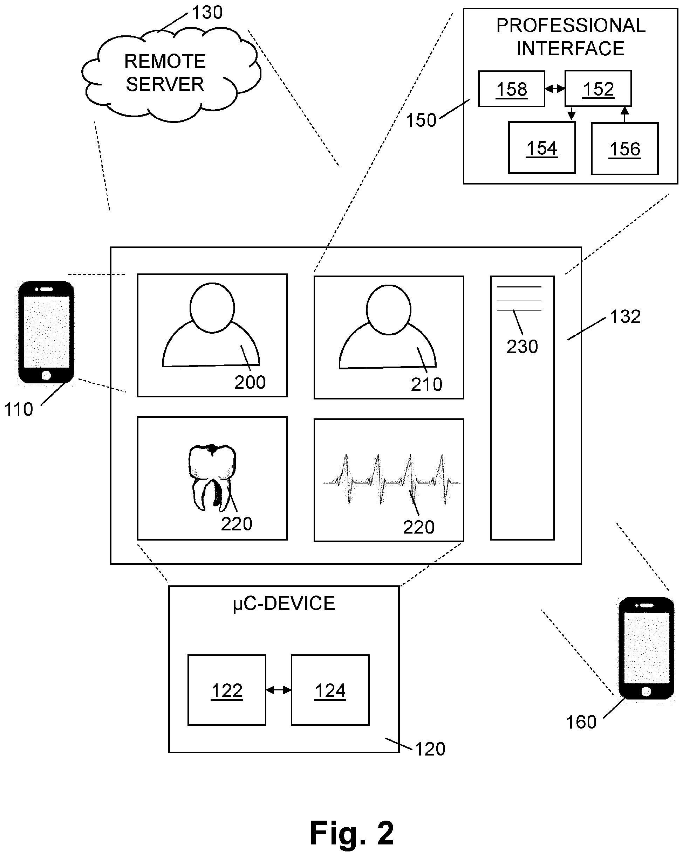

**Figure 2** shows the virtual meeting platform 132 and a virtual meeting in detail. The virtual meeting platform 132 is provided by the remote server 130, which hosts the virtual meeting. The virtual meeting may be displayed to the professional 210 and / or the client 200 as shown in Figure 2. The client 200 joins the virtual meeting via the smart device 110, which sends video and audio data of the client 200 to the virtual meeting. The professional 210 joins the virtual meeting via the professional interface 150, which also sends video and audio data of the professional 210 to the virtual meeting. The professional interface 150 further sends control instructions to the peripheral devices 140 preferably in real time, which are according to this embodiment visible in the virtual meeting. The µC-device 120 joins the virtual meeting via two separate channels. The first channel is used to show the client specific data from an intraoral camera and the second channel is used to show client specific data from a heart rate device. The intraoral camera and the heart rate device are the peripheral devices 140 according to this embodiment. The specific connection and configuration of the µC-device 120 enables to display the client data of the smart device 110 and the client specific data of the intraoral camera and the client data of the heart rate device simultaneously and in real-time to the professional 210. In addition, the real-time communication system 100 enables the professional 210 to control the peripheral devices 140 in real-time. Further, the client 200 can see the professional in real-time and can follow instructions received from the professional 210 via the smart device 110. Additional people may additionally join the virtual meeting via the additional interface 160 as indicated in Figure 2.

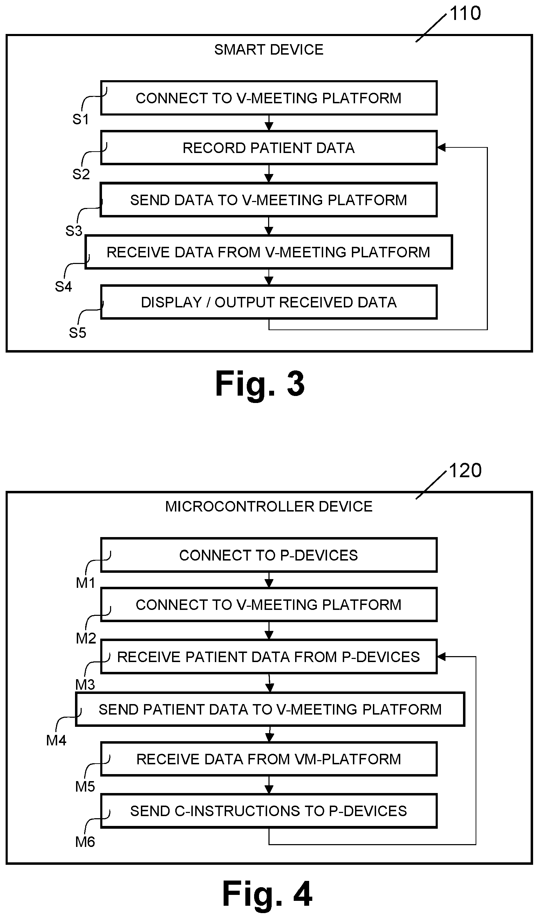

In the following paragraphs, described with reference to **Figure 3** are possible sequences of steps performed by the smart device 110 of the real-time communication system 100 during the operation of the real-time communication system 100.

In the preparatory step S1, the processor 114 of the smart device 110 connects the communication circuit 122 of the smart device 110 to the remote server 130, in particular to the virtual meeting platform 132 of the remote server 130. The remote server 130 may send a corresponding invitation to the smart device 110 to join a specific virtual meeting of the virtual meeting platform 132. This step enables the connection between the remote server 130 and the smart device 110, such that the smart device 110 may join the virtual meeting as separate participant.

In step S2, the data collecting device 116 of the smart device 110 collects data of the client, for example video and or audio data, which is transmitted to and processed by the processor 114 of the smart device 110. This data is for example real-time data.

In step S3, the communication circuit 112 of the smart device 110 is controlled by the processor 114 of the smart device to send the client data to the virtual meeting platform 132.

In step S4, the communication circuit 112 of the smart device 110 receives data from the virtual meeting platform 132. This data may comprise video or audio data from other devices / participants of the virtual meeting. The communication circuit 112 transmits the data to the processor 114, which may further process the received data. This data is for example real-time data.

In step S5, the processor 114 of the smart device 110, controls the smart device 110 to display / output the received data from the virtual meeting platform 132. The steps S2, S3, S4 and S5 are for example performed simultaneously and continuously to achieve the desired real-time communication.

In the following paragraphs, described with reference to **Figure 4** are possible sequences of steps performed by the microcontroller device 120 of the real-time communication system 100 during the operation of the real-time communication system 100.

In the preparatory step M1, the processor 124 of the µC-Device 120 connects the communication circuit 124 of the µC-device 120 to the at least one peripheral device 140.

In the preparatory step M2, the processor 124 of the µC-device 120 connects the communication circuit 124 of the µC-device 120 to the remote server 130, in particular to the virtual meeting platform 132 provided by the remote server 130. The remote server 130 may send a corresponding invitation to the µC-device 120 to join a specific virtual meeting of the virtual meeting platform 132. This step enables the connection between the remote server 130 and the µC-device 120, such that the µC-device 120 can join the specific virtual meeting as separate participant.

In step M3, the µC-device 120 receives client specific data from the at least one peripheral device 140, preferably from a plurality of peripheral devices 140. The client specific data is received by the communication circuit 122, which is connected to the peripheral devices 140. The processor 124 of the µC-device 120 controls the communication circuit. The client specific data is for example real-time data.

In step M4, the communication circuit 122 of the µC-device 120 controlled by the processor 124 sends the received, and maybe processed, client specific data to the virtual meeting platform 132 in real time, such that this data can be displayed in the virtual meeting as separate participant in real-time. In an embodiment, in case multiple peripheral devices 140 send different client specific data to the µC-device 120, this plurality of different client specific data is send by the communication circuit 122 to the virtual meeting platform 132, such that each client specific data can be displayed in the virtual meeting as separate participant in real-time and simultaneously.

In step M5, the communication circuit 122 of the µC-device 120 receives data, for example, control instructions from the remote server 130. The control instructions are for example send from the professional interface 130 directly via the remote server 130 to the µC-device 120, via the virtual meeting platform 132 or via the smart device 110. The control instructions are for example processed by the processor 124 or transferred directly to the respective peripheral device 140.

In step M6, the communication circuit 122 of the µC-device 120, in particular the respective module of the communication circuit 122, sends the respective control instructions (processed or not) to the respective peripheral device 140.

The steps M3, M4, M5 and M6 are for example performed simultaneously and continuously to enable the desired real-time communication of the real-time communication system 100.

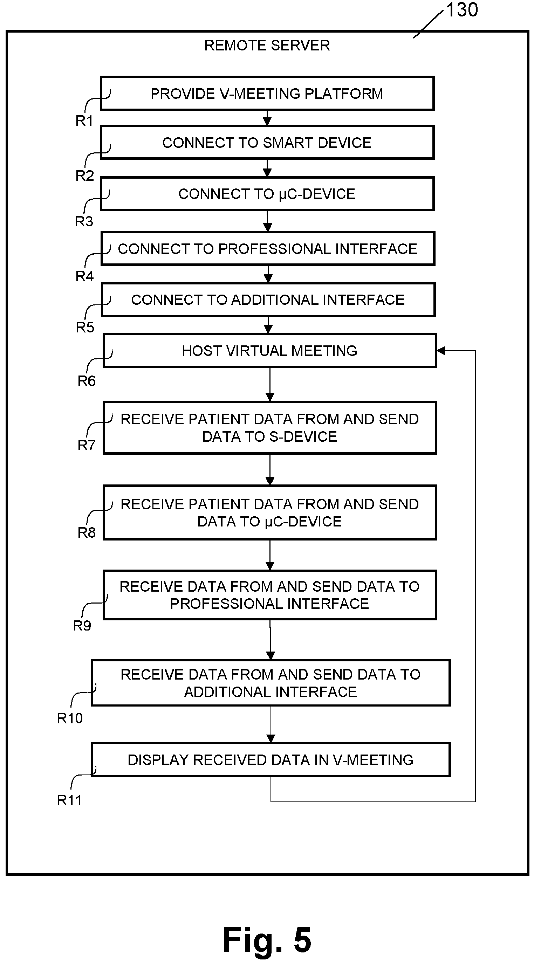

In the following paragraphs, described with reference to **Figure 5** are possible sequences of steps performed by the remote server 130 of the real-time communication system 100 during the operation of the real-time communication system 100.

In preparatory step R1, the remote server 130 provides the virtual meeting platform 132. The virtual meeting platform 132 is for example a software application running on the remote server 130, which enables access to the virtual meeting between the different devices, which are separate participants in the same virtual meeting.

In step R2, the remote server 130 connects to the smart device 110. In other words, the remote server 130, in particular the virtual meeting platform 132, establishes a connection to the smart device 110. This connection is for example established in that the remote server 130 sends an invitation to the smart device 110, which enables the smart device 110 to participate in the specific virtual meeting provided by the virtual meeting platform 132.

In step R3, the remote server 130 connects to the µC-device 120. In other words, the remote server 130, in particular the virtual meeting platform 132, establishes a connection to the µC-device 120. Also this connection is for example established in that the remote server 130 sends an invitation to the µC-device 120, which enables the µC-device 120 to participate in the specific virtual meeting provided by the virtual meeting platform 132.

In step R4, the remote server 130 connects to the professional interface 150. The remote sever 130, in particular the virtual meeting platform 132, establishes a connection to the professional interface 150. Also this connection is for example established in that the remote server 130 sends an invitation to the professional interface 130, which enables the professional interface 130 to participate in the specific virtual meeting provided by the virtual meeting platform 132.

In step R5, the remote server 130 connects to the additional interface 160. The remote server 130, in particular the virtual meeting platform 132, establishes a connection to the additional interface 160, using for example the same method as presented above.

In another embodiment, the above mentioned connections between the different devices and the remote server 130 are for example initiated by sending a request from the different devices to the remote server 130, in particularto the virtual meeting platform 132. A combination between invitation and request is also conceivable.

The steps R2, R3, R4 and R5 are for example performed in a different order and / or simultaneously.

In step R6, the remote server 130 hosts / provides the specific virtual meeting for the different participants. This step may also be performed prior to the connecting steps R2 to R5. Additionally, the remote server 130, in particular the virtual meeting platform 132, interconnects the different devices into the specific virtual meeting, such that the required real-time communication between the right participants may take place.

In step R7, the remote server 130 receives client data from the smart device 110 and sends data to the smart device 110. The client data is for example real-time data, which is immediately transferred, by the remote server 130, into the specific virtual meeting of the virtual meeting platform 132. The data sent to the smart device 110 is for example real time data from the professional interface 150, like video or audio data.

In step R8, the remote server 130 receives client specific data from the µC-device 120 and sends data to the µC-device 120. Also this received data is for example real-time data, which is immediately transferred by the remote server 130 into the specific virtual meeting of the virtual meeting platform 132. The send data are for example the control instructions for the specific peripheral device 140.

In step R9, the remote server 130 receives professional data from the professional interface 150 and sends data to the professional interface 150. Also this received data is for example real-time data, which is immediately transferred by the remote server 130 into the specific virtual meeting of the virtual meeting platform 132. The professional data may include control instructions to control at least one of the peripheral devices 140. The sent data is for example data from the smart device 110 and / or of the µC-device 120.

In step R10, the remote server 130 receives additional data from the additional interface 160 and sends data to the additional interface 160. Also this received data is for example real-time data, which is immediately transferred by the remote server 130 into the specific virtual meeting of the virtual meeting platform 132. The send data is for example data from the professional interface 150, the smart device 110 and / or the µC-device 120.

In step R11, the remote server 130, in particular the virtual meeting platform 132 displays / transfers the received data from the different devices into the specific virtual meeting. The steps R6, R7, R8, R9, R10 and R11 are for example performed simultaneously to enable the required real-time virtual meeting.

The remote server 130, in particular the virtual meeting platform 132, is configured to simultaneously send and receive data, form the different devices in real-time to enable the virtual meeting between the different participants.

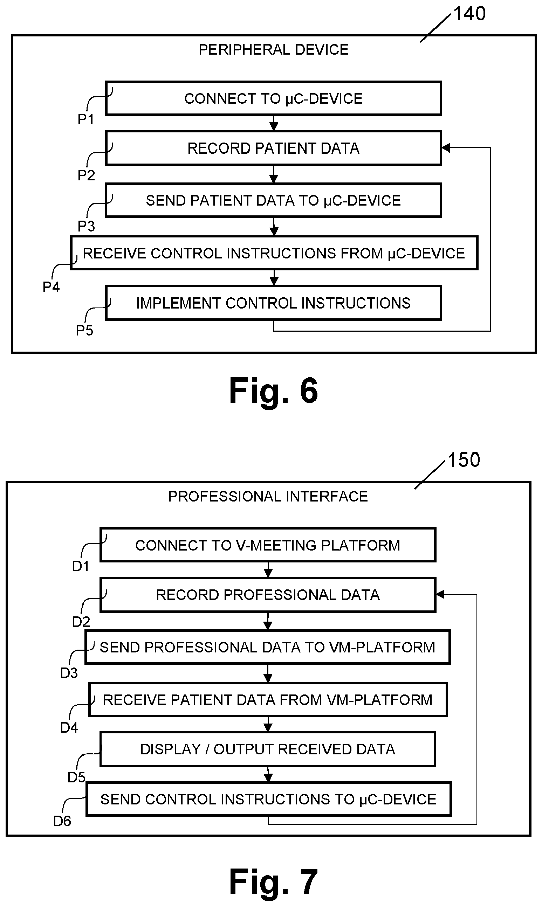

In the following paragraphs, described with reference to **Figure 6** are possible sequences of steps performed by the at least one peripheral device 140 of the real-time communication system 100 during operation of the real-time communication system 100.

In step P1, the at least one peripheral device 140 connects to the µC-Device 120, in particular to the communication circuit 122 of the µC-Device 120. The peripheral device 140 may comprise also a respective communication circuit to establish the connection.

In step P2, the peripheral device 140 records client specific data of the client 200. The client specific data is for example temperature data, audio or video data. Recording and or measuring of the client specific data is for example controlled by a processor of the peripheral device 140.

In step P3, the peripheral device 140 sends the client data to the µC-Device 120 using the established connection to the µC-Device 120. The data is for example send via the communication circuit of the peripheral device 140 in real time.

In step P4, the peripheral device 140, in particular the processor of the peripheral device 140, which is configured to control the peripheral device 140, receives control instructions from the µC-Device 120.

In step P5, the peripheral device 140, in particular the processor of the peripheral device 140 implements the control instructions. The control instructions are for example processed and implemented by the processor of the peripheral device 140 to control the peripheral device 140 as desired.

The steps P2, P3, P4 and P5 are for example executed at least partially iteratively and / or simultaneously.

In the following paragraphs, described with reference to **Figure 7** are possible sequences of steps performed by the at least one professional interface 150 of the real-time communication system 100 during operation of the real-time communication system 100.

In step D1, the professional interface 150, in particular the communication circuit 158 of the professional interface 150 connects to the remote server 130, in particular to the virtual meeting platform 132.

In step D2, the input device 156 of the professional interface 150 records data of the professional 200, for example audio or video data. The data of the professional captured by the input device 156 further, may comprise the control instruction for the at least one peripheral device 140.

In step D3, the communication circuit 158 of the professional interface 150 is send to the remote server 130, in particular to the virtual meeting platform 132 via the established connection to the remote server 130.

In step D4, the communication circuit 158 of the professional interface 150 receives data from the virtual meeting platform 132 of the virtual meeting. In other words, the required information from the client (from the smart device 110 and the µC-Device 120 is send to the professional interface 150).

In step D5, the output device 154 of the professional interface 150 displays and / or presents the received client data to the professional 210, for example via a display screen or speakers.

In step D6, the communication circuit 158 of the professional interface 150 further sends the recorded control instructions to the µC-Device 120 via the remote server 130.

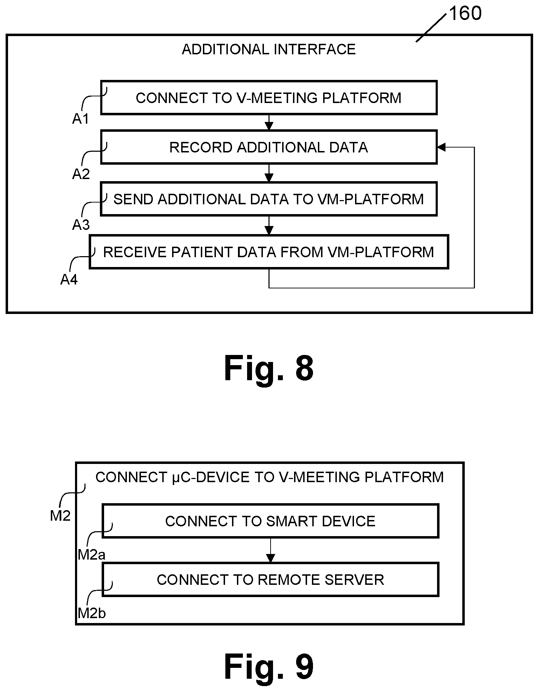

In the following paragraphs, described with reference to **Figure 8** are possible sequences of steps performed by the at least one additional interface 160 of the real-time communication system 100 during operation of the real-time communication system 100.

In step A1, the additional interface 160, in particular a communication circuit of the additional interface 160 connects to the remote server 130, in particular to the virtual meeting platform 132.

In step A2, the additional interface 160, in particular an input device of the additional interface record additional data, for example audio and / or video data.

In step A3, the additional interface 160, in particular the communication circuit of the additional interface 160, sends the additional data to the remote server 130, in particular to the virtual meeting platform 132, such that this data can be displayed simultaneously and in real-time in the specific virtual meeting provided by the virtual meeting platform.

In step A4, the additional interface 160, in particular the communication circuit of the additional interface 160, receives data from the remote server 130, in particular from the virtual meeting platform 132, such that this data can be displayed simultaneously and in real-time to the user of the additional interface 160, for example via an output device of the additional interface 160. The output device is for example a display and a speaker.

The steps A2, A3 and A4 are for example executed simultaneously to provide the required real-time communication.

**Figure 9** shows a seventh flow diagram illustrating an exemplary embodiment of step M2 as shown in Figure 4. In step M2, the µC-device 120 connects to the virtual meeting platform 132. According to the embodiment as shown in figure 9, this connection is established via the smart device 110. Therefore, in step M2a, the µC-device 120, in particular the communication circuit 122 of the µC-device 120 connects to the smart device 110, in particular to the communication circuit 112 of the smart device 110. In step M2b, the µC-device 120, in particular the communication circuit 122 of the µC-device 120, connects to the remote server 130, in particular to the virtual meeting platform 132 of the remote server 130, using the smart device 110, in particular the established connection between the µC-device 120 and the smart device 110.

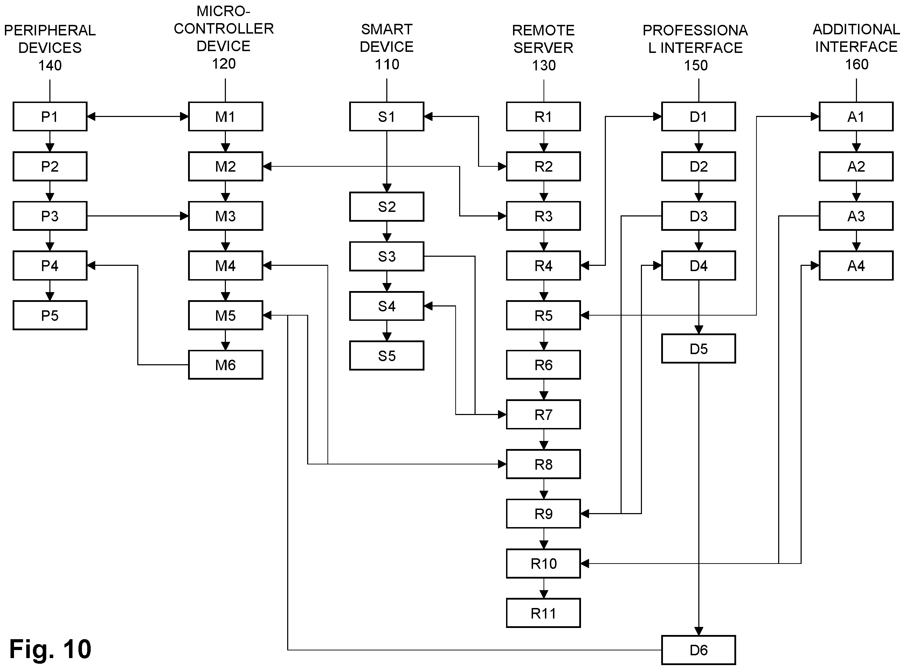

**Figure 10** shows an eight flow diagram illustrating an exemplary sequence of steps performed by the real-time communication system 100 during its operation. In particular, figure 10 shows at least partially the combination and interaction of the different steps between the different devices as presented in the figures 3-9. In detail: Figure 10 shows that in step P1 and in step M1, the connection between the peripheral device 140 and the microcontroller device 120 is established. In step P2, the peripheral device 140 records client data. In step P3, the peripheral device 140 sends the client specific data to the µC-device 120. In step P4, the peripheral device 140, receives control instructions from the µC-device 120 and in step P5, the control instructions are implemented by the peripheral device 140.

In step M2 and in step R3, the connection between the remote server 130 and the µC-device 120 is established. In step M3, the µC-device 120 receives the client specific data from the peripheral devices 140. In step M4, the µC-device 120 sends the client specific data to the remote server 130, in particular to the virtual meeting platform 132. In step M5, the remote server 130 sends data to the µC-device 120, for example control instructions for the peripheral devices 140. In step M6, the control instructions are send to the peripheral devices 140.

In step S1 and in step R, the connection between the remote server 130 and the smart device 110 is established. In step S2, the smart device 110 records the client data. In step S3, the client data is send to the remote server 130, in particular to the virtual meeting platform 132. In step S4, the smart device 110 receives data from the remote server 130. In step S5, the smart device 110 displays / outputs the received data to the client 200.

In step R1, the remote server 130 provides the virtual meeting platform 132. In the steps R2, R3, R4 and R5, the remote server 130 connects to the different devices. In step R6, the remote server 130 hosts the virtual meeting. In step R7, the remote server 130, receives client data from the smart device 110 and simultaneously sends data to the smart device 110. In step R8, the remote server 130, receives client specific data from the µC-device 120 and simultaneously sends data to µC-device 120. In step R9, the remote server 130, receives data from the professional interface 150 and simultaneously sends data to the professional interface 150. In step R10, the remote server 130, receives data from the additional interface 160 and simultaneously sends data to the additional interface 160. In addition and simultaneously, the remote server 130 displays in step R11 the received data in the virtual meeting.

In step D1, the professional interface 150 establishes the connection to the remote server 130. In step D2, the professional interface 150 records professional data. In step D3, the professional interface 150 sends the recorded professional data to the remote server 130, in particular to the virtual meeting platform 132. In step D4, the professional interface 150 receives data from the remote server 130. In step D5, the professional interface 150 displays / outputs the received data. In step D6, the professional interface 150 sends control instructions to the µC-device 120.

In step A1, the additional interface 160 establishes the connection to the remote server130. In step A2, the additional interface 160 records additional data, for example audio and video data. In step A3, the additional interface 160 sends the additional data to the remote server 130. In step A4, the additional interface 160 receives data from the remote server 130, in particular from the virtual meeting platform 132.

Many of the above-mentioned steps are, according to this embodiment performed simultaneously to achieve the desired real-time communication between the different devices of the real-time communication system 100. With the different devices and the described functionalities of the devices and the different connections between the different devices it is possible to enable the real-time communication between the professional 210, the client 200, additional people and the data collected by at least one peripheral device 140.

It should be noted that, in the description, the sequence of the steps has been presented in a specific order, one skilled in the art will understand, however, that the order of at least some of the steps could be altered, without deviating from the scope of the disclosure.

### LIST OF REFERENCE SYMBOLS

- 100: real-time communication system
- 110: smart device
- 112: communication circuit of the smart device
- 114: processor of the smart device
- 116: data dollecting device of the smart device (camera, audio etc)
- 120: µc device (µc)
- 122: communication circuit of the µc device
- 124: processor of the µc device
- 130: remote server
- 132: meeting platform
- 140: peripheral devices
- 142: camera
- 144: ultrasound device
- 146: temperatures sensor
- 150: professional interface
- 152: processor of the professional interface
- 154: output device
- 156: input device
- 158: communication circuit of the professional interface
- 160: additional interface
- 200: client
- 210: professional

- S1: connect smart device to virtual meeting platform
- S2: record client data (by smart device)
- S3: send client data to virtual meeting platform (by smart device via remote server)
- S4: receive data from virtual meeting platform
- S5: display / output received data

- M1: connect µC device to peripheral devices
- M2: connect µC device to virtual meeting platform
- M2a: connect µC device to smart device
- M2b: connect µC device to remote sever
- M3: receive client-specific data from peripheral devices
- M4: send client-specific data to virtual meeting platform
- M5: receive control instructions from professional interface via remote server
- M6: send control instructions to peripheral device

- R1: provide virtual meeting platform
- R2: connect remote server to smart device
- R3: connect remote server to µC device
- R4: connect remote server to professional interface
- R5: connect remote server to additional device
- R6: host virtual meeting
- R7: receive client data from smart device
- R8: receive client data from µC device
- R9: receive data from professional interface
- R10: receive data from additional interface
- R11: display received data in virtual meeting

- P1: connect to µC device
- P2: record client-specific data
- P3: send client-specific data to µC device
- P4: receive control instructions from µC device
- P5: implement control instructions

- D1: connect to virtual meeting platform
- D2: record professional data
- D3: send professional data to virtual meeting platform
- D4: receive client data from virtual meeting platform
- D5: display / output received data
- D6: send control instructions to µC device

- A1: connect to virtual meeting platform
- A2: record additional data
- A3: send additional data to virtual meeting platform
- A4: receive client data from virtual meeting platform

## Claims

1. A real-time communication system (100), the real-time communication system (100) comprising a smart device (110) and a microcontroller device (120), the smart device (110) comprising a processor (114) and a communication circuit (112) connected to the processor (114), the µC device (120) comprising a processor (124) and a communication circuit (112) connected to the processor (124), the processor (114) of the smart device (110) and the processor (124) of the µC device (120) being configured to perform the following steps:
a. connecting (M1), by the processor (124) of the µC device (120), the communication circuit (122) of the µC device (120) to at least one peripheral device (140), which is configured to send (P3) client specific data of a client (200) in real-time to the µC device (120);
b. connecting (M2), by the processor (124) of the µC device (120), the communication circuit (122) of the µC device (120) to a virtual meeting platform (132), which is provided (R1) by a remote server (130), such that the µC device (120) is configured to participate as separate participant in a virtual meeting provided (R6) by the virtual meeting platform (132);
c. connecting (S1), by the processor (114) of the smart device (110), the communication circuit (122) of the smart device (110) to the virtual meeting platform (132) such that the smart device (110) is configured to participate as separate participant in the virtual meeting;
d. sending (M4), by the processor (124) of the µC device (120), the provided client specific data from the µC device (120) to the remote server (130) in real-time and simultaneously sending (S3), by the processor (114) of the smart device (110), captured data of the client (200) from the smart device (110) to the remote server (130) in real-time, such that the client data from the µC device (120) and the data from the smart device (110) can be displayed simultaneously and in real-time in the virtual meeting.

2. The real-time communication system (100) according to claim 1, wherein the processor (124) of the µC device (120) is configured to connect (M2) the communication circuit (122) of the µC device (120) to the virtual meeting platform (132) using a wireless local area network connection or a wired local area network connection between the communication circuit (122) of the µC device (120) and a local area network, which is connected to the remote server (130).

3. The real-time communication system (100) according to one of the preceding claims, wherein the processor (124) of the µC device (120) is configured to connect (M2) the communication circuit (122) of the µC device (120) to the virtual meeting platform (132) via the smart device (110) using a connection between the communication circuit (122) of the µC device (120) and the communication circuit (112) of the smart device (110), which is connected to the remote server (130).

4. The real-time communication system (100) according to claim 3, wherein the connection between the communication circuit (122) of the µC device (120) and the communication circuit (112) of the smart device (110) is a Bluetooth connection, a wireless local area network connection or a universal serial bus connection.

5. The real-time communication system (100) according to one of the preceding claims, wherein the processor (114) of the smart device (110) is further configured to receive (S4) data from the remote server (130) and to display and / or output (S5) the received data to the client (200) in real-time.

6. The real-time communication system (100) according to one of the preceding claims, wherein the processor (124) of the µC device (120) is further configured to receive (M5) control instructions from the remote server (130) in real-time and to control (M6) at least one of the peripheral devices (140) using the received control instructions.

7. The real-time communication system (100) according to one of the preceding claims, wherein the at least one peripheral device (140), which is configured to provide the client specific data to the µC device (120), comprises a camera (142), preferably an intraoral camera, an ultrasound device (144), a temperature sensor (146), a stethoscope device, a blood pressure measuring device, a pulse oximeter device, a pulse measuring device, an EKG device, a dermatoscopic device, an ophthalmoscopy device, an endoscopic device, an electroencephalograph, an electromyography and / or an electroneneurograph.

8. The real-time communication system (100) according to one of the preceding claims, wherein the processor (124) of the µC device (120) is configured to connect (M1) the communication circuit (122) of the µC device (120) to the at least one peripheral device (140) using a wireless local area network connection, a local area network connection, an USB connection or a Bluetooth connection.

9. The real-time communication system (100) according to one of the preceding claims, wherein the processor (112) of the smart device (110) is configured to connect (S1) the communication circuit (112) of the smart device (110) to the virtual meeting platform (132) using a mobile communication network connection, in particular a mobile data network, such as Global System for Mobile Communication (GSM), Code Division Multiple Access (CDMA), or Long Term Evolution (LTE) networks, and/or a close range wireless communication interface using a Wi-Fi network (WLAN), Bluetooth, or a local area network connection.

10. A method for operating the real-time communication system (100) according to one of the claims 1 to 9, the method comprising the steps of:
a. connecting (M1), by the processor (124) of the µC device (120), the communication circuit (122) of the µC device (120) to at least one peripheral device (140), which sends (P3) client specific data of a client (200) to the µC device (120) in real-time;
b. connecting (M2), by the processor (124) of the µC device (120), the communication circuit (122) of the µC device (120) to a virtual meeting platform (132), which is provided by a remote server (130), such that the µC device (120) participates as separate participant in a virtual meeting provided by the virtual meeting platform (132);
c. connecting (S1), by the processor (114) of the smart device (110), the communication circuit (122) of the smart device (110) to the virtual meeting platform (132) such that the smart device (110) participates as separate participant in the virtual meeting;
d. sending (M4), by the processor (124) of the µC device (120), the provided client specific data from the µC device (120) to the remote server (130) in real time and simultaneously sending (S3), by the processor (114) of the smart device (110), captured data of the client (200) from the smart device (110) to the remote server (130) in real-time, such that the client specific data from the µC device (120) and the data from the smart device (110) is displayed simultaneously and in real-time in the virtual meeting.

11. The method according to claim 10, wherein the processor (124) of the µC device (120) connects (M2) the communication circuit (122) of the µC device (120) to the virtual meeting platform (132) via the smart device (110) using a connection between the communication circuit (122) of the µC device (120) and the communication circuit (112) of the smart device (110), which is connected to the remote server (130).

12. The method according to one of the claims 10 to 11, further comprising:
a. receiving (S4), by the processor (114) of the smart device (110), data from the remote server (130) in real-time and displaying (S5), by the processor (114) of the smart device (110), the received data to the client (200) in real-time.

13. The method according to one of the claims 10 to 12, further comprising:
a. receiving (M5), by the processor (124) of the µC device (120), control instructions from the remote server (130) in real-time;
b. controlling (M6) at least one of the peripheral devices (140) using the received control instructions.

14. The method according to one of the claims 10 to 13, wherein the processor (124) of the µC device (120) connects (M1) the communication circuit (122) of the µC device (120) to the at least one peripheral device (140) using a wireless local area network connection, a local area network connection, an USB connection or a Bluetooth connection.

15. A computer program product comprising a non-transitory computer readable medium having stored thereon computer program code configure do direct the processor (124) of the µC device (120) and the processor (114) of the smart device (110) to perform a method according to one of the claims 10 to 14.
